# EUROPEAN PATENT APPLICATION

(11) **EP 3 805 101 A1**
(43) Date of publication of application: **14.04.2021**
(21) Application number: 19921682.1
(22) Date of filing: 28.03.2019
(51) Int. Cl.: B64D 1/18, F04B 43/04

(54) **AGRICULTURAL PLANT PROTECTION MACHINE AND DIAPHRAGM PUMP THEREOF**

(71) Applicant: SZ DJI Technology Co., Ltd., Shenzhen, Guangdong 518057 (CN)
(72) Inventor: SHU, Zhan, Shenzhen, Guangdong 518057 (CN); ZHOU, Le, Shenzhen, Guangdong 518057 (CN); ZHOU, Wanren, Shenzhen, Guangdong 518057 (CN)
(74) Representative: Goddar, Heinz J.
(86) International application number: PCT/CN2019/080172
(87) International publication number: WO 2020/191732

(57) **Abstract**

An agricultural plant protection machine and a diaphragm pump thereof are provided. The diaphragm pump (400) includes: a pump body (1) including a containing cavity; a pump cover (2) on the pump body; a diaphragm (3) arranged in the containing cavity, the diaphragm matches the pump cover so that the diaphragm and the pump cover surround to form a cavity (4); and a driving mechanism (5) arranged in the containing cavity. The driving mechanism includes a push rod (51), a coil assembly (52) and an elastic reset member (53). The push rod is connected to the diaphragm, and connected to the elastic reset member. When the coil assembly is powered on and powered off alternately, the push rod makes a reciprocating linear motion to drive the diaphragm to reciprocate relative to the pump cover so as to reduce or enlarge the cavity. When the coil assembly is powered on, the push rod moves forward under the magnetic attraction of the coil assembly; when the coil assembly is powered off, the push rod moves backward under the elastic force of the elastic reset member, and the forward and backward are two opposite directions.

## Description

### TECHNICAL FIELD

The present invention relates to the field of pumps, in particular to an agricultural plant protection machine and a diaphragm pump thereof.

### BACKGROUND

Due to their good corrosion resistance, diaphragm pumps have been widely used in the plant protection industry in recent years. A diaphragm pump is a reciprocating positive displacement pump, which realizes the volume change of its cavity through the reciprocating movement of a diaphragm, thereby pumping out a pesticide.

The power of an existing diaphragm pump is generally derived from a motor, and the rotary motion of the motor is converted into reciprocating motion through an eccentric wheel or a crank slider mechanism to drive the diaphragm to reciprocate. However, due to the existence of the motor, this type of diaphragm pump has some disadvantages, such as complex structure, large volume, heavy weight, and high cost. Moreover, since a conversion mechanism is required from the rotating motion to the reciprocating motion, this arrangement inevitably brings about problems such as loss of mechanical efficiency, increased energy consumption, and decreased endurance. At the same time, the wear of the conversion mechanism also limits the service life of a diaphragm pump. In addition, after the rotary motion is converted into the reciprocating motion, the stroke of the diaphragm exhibits a sinusoidal change, and the rate of volume change is uneven, resulting in uneven flow and pressure of the diaphragm pump, which will eventually cause pulsation in the diaphragm pump.

### SUMMARY

The present invention provides an agricultural plant protection machine and a diaphragm pump thereof.

Specifically, the present invention is implemented through the following technical solutions:

According to a first aspect of the present invention, a diaphragm pump of an agricultural plant protection machine is provided, the diaphragm pump includes:
a pump body including a containing cavity;
a pump cover on the pump body;
a diaphragm arranged in the containing cavity, the diaphragm being coupled with the pump cover, so that the diaphragm and the pump cover surround to form a cavity; and
a driving mechanism in the containing cavity, the driving mechanism including a push rod, a coil assembly and an elastic reset member, the push rod being connected to the diaphragm, and connected to the elastic reset member;
when the coil assembly is powered on and powered off alternately, the push rod makes a reciprocating linear motion to drive the diaphragm to reciprocate relative to the pump cover so as to reduce or enlarge the cavity;=
where, when the coil assembly is powered on, the push rod moves along a forward direction under a magnetic attraction force from the coil assembly; when the coil assembly is powered off, the push rod moves along a backward direction under an elastic force from the elastic reset member, and the forward direction and the backward direction are two opposite directions..

According to a second aspect of the present invention, an agricultural plant protection machine is provided, which includes a frame, a liquid storage tank to store a pesticide, a pipe connected with the liquid storage tank, and a spray assembly, characterized in that the agricultural plant protection machine further comprises a diaphragm pump connected between the liquid storage tank and the spray assembly via the pipe, the diaphragm pump includes:
a pump body including a containing cavity;
a pump cover on the pump body;
a diaphragm in the containing cavity, the diaphragm being coupled with the pump cover, so that the diaphragm and the pump cover surround to form a cavity; and
a driving mechanism arranged in the containing cavity, the driving mechanism including a push rod, a coil assembly and an elastic reset member, the push rod being connected to the diaphragm, and connected to the elastic reset member;
when the coil assembly is powered on and powered off alternately, the push rod makes a reciprocating linear motion to drive the diaphragm to reciprocate relative to the pump cover so as to reduce or enlarge the cavity;
where, when the coil assembly is powered on, the push rod moves along a forward direction under a magnetic attraction force from the coil assembly; when the coil assembly is powered off, the push rod moves along a backward direction under an elastic force from the elastic reset member, and the forward direction and the backward direction are two opposite directions.

It can be seen from the technical solutions provided by the above embodiments of the present invention that the diaphragm pump of the present invention is provided with a coil assembly, an elastic reset member and a push rod in the pump body. By alternately powering on and powering off the coil assembly, the push rod is directly driven to reciprocate linearly. It has a simple structure, small size, light weight and low cost. Moreover, since the diaphragm pump does not need a conversion mechanism, it has high efficiency, good heat dissipation, energy saving, and strong endurance. At the same time, the diaphragm pump does not have wear parts such as a conversion mechanism, so it has a long service life. In addition, the diaphragm stroke changes linearly, the speed of the diaphragm pump is even, the pulsation is small, and the flow is even.

### BRIEF DESCRIPTION OF THE DRAWINGS

In order to more clearly illustrate the technical solutions in the embodiments of the present invention, the following will briefly present the drawings used in the description of the embodiments. Obviously, the drawings in the following description are only a few embodiments of the present invention. To those skilled in the art, other drawings can be obtained on the basis of these drawings without inventive efforts.
FIG. 1 is a perspective view of a diaphragm pump in an embodiment of the present invention;
FIG. 2 is a schematic cross-sectional view of a diaphragm pump in an embodiment of the present invention;
FIG. 3 is a partial enlarged view of the diaphragm pump in the embodiment shown in FIG. 2;
FIG. 4 is a schematic cross-sectional view of the diaphragm pump in another direction in an embodiment of the present invention;
FIG. 5 is a perspective view of a diaphragm pump in another embodiment of the present invention;
FIG. 6 is a schematic cross-sectional view of a diaphragm pump in another embodiment of the present invention;
FIG. 7 is a perspective schematic view of a pressure relief device in an embodiment of the present invention;
FIG. 8 is a schematic cross-sectional view of a pressure relief device in an embodiment of the present invention;
FIG. 9 is a three-dimensional schematic diagram of an agricultural plant protection machine in an embodiment of the present invention.

### Reference signs:

100: Frame; 110: Body; 120: landing gear; 130: Arm; 200: Liquid storage tank; 300: Spray head; 400: Diaphragm pump;
1: Pump body; 11: Liquid inlet; 12: Liquid outlet; 13: Second fixing part;
2: Pump cover;
3: Diaphragm;
4: Cavity;
5: Driving mechanism; 51: Push rod; 511: Rod body; 512: Protrusion; 52: Coil assembly; 521: Coil; 522: Base; 53: Elastic reset member;
6: First containing part;
7: Second containing part;
8: Quick release member;
9: Diaphragm support;
10: Connecting part;
20: End cap;
30: Valve cover; 310: First fixing part;
40: First check valve; 410: First check valve spool; 420: First elastic member;
50: Second check valve; 510: Second check valve spool; 520: Second elastic member;
60: Pressure relief device;
610: Main valve;
611: Liquid inlet part;
612: Liquid outlet part;
613: First spool;
614: First valve body;
615: Third cavity;
616: First elastic reset member;
617: First sliding protrusion;
6171: Second drainage port;
620: Pilot valve;
621: Second spool;
6211: Sealed end;
6212: Second sliding protrusion;
622: First channel;
623: Second valve body;
624: Fourth cavity;
625: Second elastic reset member;
626: Adjustment member;
630: Drainage channel;
631: First drainage port.

### DETAILED DESCRIPTION

The technical solutions in the embodiments of the present invention will be clearly described below with reference to the drawings in the embodiments of the present invention. Apparently, the described embodiments are only a part of the embodiments, rather than all the embodiments of the present invention. Based on the embodiments of the present invention, all other embodiments obtained by those of ordinary skill in the art without creative work shall fall within the scope of protection of the present invention.

The following section describes in detail the agricultural plant protection machine and its diaphragm pump according to the present invention with reference to the accompanying drawings. In the case of no conflict, the following embodiments and features in the implementation can be combined with each other.

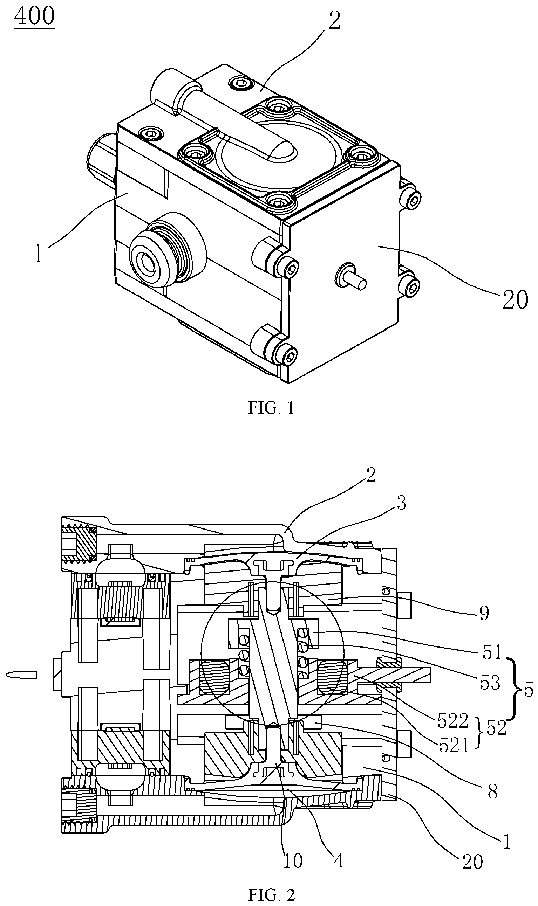

With reference to FIGS. 1 and 2, an embodiment of the present invention provides a diaphragm pump. The diaphragm pump 400 may include a pump body 1, a pump cover 2, a diaphragm 3 and a driving mechanism 5. The pump cover 2 is arranged on the pump body 1, the pump body 1 is provided with a containing cavity (not shown), and the diaphragm 3 and the driving mechanism 5 are both arranged in the containing cavity. In this embodiment, the driving mechanism 5 is arranged in the containing cavity, which can minimize the volume of the pump body 1. The diaphragm 3 of this embodiment is matched with the pump cover 2 so that the diaphragm 3 and the pump cover 2 surround to form a cavity 4. Further, the driving mechanism 5 of this embodiment may include a push rod 51, a coil assembly 52 and an elastic reset member 53, and the push rod 51 is connected to the diaphragm 3. In addition, the push rod 51 is also connected to the elastic reset member 53.

In this embodiment, when the coil assembly 52 is alternately powered on and powered off, the push rod 51 may make a reciprocating linear motion to drive the diaphragm 3 to reciprocate relative to the pump cover 2, and the result is that the cavity 4 becomes smaller or larger. Specifically, when the coil assembly 52 is powered on, the push rod 51 moves forward under the magnetic attraction of the coil assembly 52; when the coil assembly 52 is powered off, the push rod 51 moves backward under the elastic force of the elastic reset member 53, where forward and backward are two opposite directions. It can be understood that when the coil assembly 52 is powered on, the coil assembly 52 will generate an electromagnetic field, and the magnetic attraction of the coil assembly 52 acts on the push rod 51 to drive the push rod 51 to move forward; when the coil assembly 52 is powered off, the electromagnetic field of the coil assembly 52 disappears, and the elastic force of the elastic reset member 53 acts on the push rod 51 to drive the push rod 51 to make a backward movement to realize the reset.

In various implementations, the definitions of forward and backward may be different. In the embodiment shown in FIG. 2, the forward direction is vertically downward, and the backward direction is vertically upward. In other embodiments, the forward direction may be vertically upward, and the backward direction may be vertically downward; or, the forward direction may be horizontally leftward, and the backward direction may be horizontally rightward, and so on.

In the diaphragm pump 400 of the embodiments of the present invention, the coil assembly 52, the elastic reset member 53 and the push rod 51 are arranged in the pump body 1, and the coil assembly 52 is alternately powered on and powered off to directly drive the push rod 51 to linearly reciprocate. It is characterized with a simple structure, a small size, a light weight and a low cost. Moreover, the diaphragm pump 400 does not need a conversion mechanism; it has high efficiency, good heat dissipation, can save energy, and has strong endurance. At the same time, the diaphragm pump 400 has no wearing parts, such as a conversion mechanism, so it has a long service life. In addition, the stroke of the diaphragm 3 may change linearly, and the speed of the diaphragm pump 400 is even, its pulsation is small, and its flow rate is even.

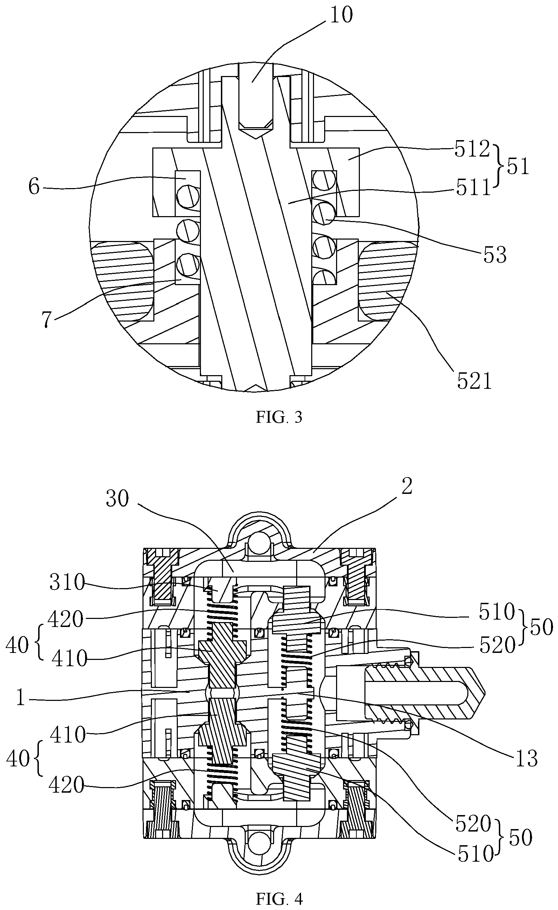

The structural matching manner of the coil assembly 52 and the push rod 51 can be designed as needed. For example, in the embodiment shown in FIGS. 2 and 3, the push rod 51 includes a rod body 511 and a protrusion 512. The rod body 511 may be used to connect the diaphragm 3. Optionally, the diaphragm pump 400 may be a single-diaphragm pump, and one end of the rod body 511 is connected to the diaphragm 3; optionally, the diaphragm pump 400 may be a twin-diaphragm pump, and both ends of the rod body 511 each connect to a diaphragm 3.

Optionally, the protrusion 512 may be arranged on a side wall of the rod body 511. Of course, the protrusion 512 may also be arranged at other positions, such as an end of the rod body 511. In addition, the protrusion 512 may be integrally formed on the rod body 511. Of course, the protrusion 512 may also be provided separately from the rod body 511, and the protrusion 512 may be fixed on the rod body 511 by conventional means such as snap connection and screw connection.

In some embodiments, the protrusion 512 and the rod body 511 may be made of the same material, such as iron, nickel, cobalt and other metal materials capable of moving under the action of magnetic attraction, or a combination of the foregoing metal materials. In other embodiments, the protrusion 512 and the rod body 511 may be made of different materials, where the protrusion 512 may be made of a metal material capable of moving under the action of magnetic attraction, such as iron, nickel, and cobalt, or a combination of the foregoing metal materials. The rod body 511 may be made of a material having a low density such as plastic, so that the weight of the push rod 51 can be reduced, thereby reducing the weight of the diaphragm pump 400.

The protrusion 512 of this embodiment is spaced apart from the coil assembly 52. When the coil assembly 52 is powered on, the protrusion 512 moves forward under the magnetic attraction of the coil assembly 52, which drives the rod body 511 to move forward. Specifically, when the coil assembly 52 is powered on, the protrusion 512 moves in a direction toward the coil assembly 52 under the magnetic attraction of the coil assembly 52, which drives the rod body 511 to move in the direction toward the coil assembly 52. When the coil assembly 52 is powered off, the magnetic attraction of the coil assembly 52 disappears. The protrusion 512 thus moves in a direction away from the coil assembly 52 under the elastic force of the elastic reset member 53, which drives the rod body 511 and the protrusion 512 to move in the direction away from the coil assembly 52.

When designing the positional relationship between the coil assembly 52 and the protrusion 512, it is necessary to consider that the magnetic attraction of the coil assembly 52 can act on the protrusion 512, so that the protrusion 512 can move forward. In some embodiments, the protrusion 512 is directly opposing to the coil assembly 52. In such a structural design, the magnetic attraction of the coil assembly 52 can act on the protrusion 512 in a better way. Of course, in some embodiments, the protrusion 512 and the coil assembly 52 may be disposed opposite to each other, but they do not need to be disposed directly opposite to each other.

The shape of the protrusion 512 may also be designed as needed. In the embodiment shown in FIGS. 2 and 3, the protrusion 512 has a ring-shape structure, and the coil assembly 52 is sleeved and fixed on the rod 511. That is, the coil assembly 52 also roughly has a ring structure. In this structural design, the structure of the coil assembly 52 and the push rod 51 can be designed more compact, reducing the space occupied by the coil assembly 52 and the push rod 51, so that the containing cavity can be designed smaller, which is beneficial to the miniaturized design of the pump body 1. At the same time, adopting such a structural design ensures that the coil assembly 52 and the protrusion 512 are oppositely arranged, which ensures to the greatest extent that the magnetic attraction generated by the coil assembly 52 can act on the protrusion 512. That is, it is ensured that the magnetic attraction of the coil assembly 52 can attract the protrusion 512 to move forward toward the coil assembly 52. It can be understood that the shape of the protrusion 512 is not limited to the ring-shape shape, and the fixing method of the coil assembly 52 and the rod body 511 is not limited to the sleeving manner.

The design of the structural relationship between the elastic reset member 53 and the push rod 51 can also be selected as needed. In the embodiment shown in FIG. 2, the elastic reset member 53 is sleeved over the rod body 511; one end of the elastic reset member 53 is connected to the protrusion 512, and the other end of the elastic reset member 53 is connected to the coil assembly 52. That is, the elastic reset member 53 is arranged between the protrusion 512 and the coil assembly 52. When the coil assembly 52 is powered on, the protrusion 512 moves forward under the action of the magnetic attraction of the coil assembly 52. At this time, the elastic reset member 53 is in a compressed state. When the coil assembly 52 is powered off, the elastic reset member 53 is reset, and the protrusion 512 moves backward under the elastic force of the elastic reset member 53.

In some embodiments, referring to FIG. 3, a first containing part 6 is provided between the protrusion 512 and the rod body 511, and a second containing part 7 is provided between the coil assembly 52 and the rod body 511. One end of the elastic reset member 53 is contained in the first containing part 6, and the other end thereof is contained in the second containing part 7. Through the first containing part 6 and the second containing part 7, the elastic reset member 53 is more firmly fixed to prevent the elastic reset member 53 from falling off and failing. Optionally, both the first containing part 6 and the second containing part 7 are slots.

In addition, the type of elastic reset member 53 may be selected based on actual needs. In some embodiments, the elastic reset member 53 may be a spring. In some embodiments, the elastic reset member 53 may be made of a flexible material, such as rubber, plastic and other flexible materials. This embodiment does not specifically limit the material of the elastic reset member 53.

Referring to FIG. 2 again, the diaphragm pump 400 may further include a quick release member 8, and the coil assembly 52 is fixed to the pump body 1 via the quick release member 8. The coil assembly 52 is detachably connected to the pump body 1 through the quick release member 8. After the coil assembly 52 is damaged, it is convenient to remove the coil assembly 52 from the pump body 1, thereby facilitating the maintenance and replacement of the coil assembly 52. The quick release member 8 may be a screw, a buckle or other quick release structures. The specific type of the quick release member 8 is not limited in this embodiment.

Referring also to FIG. 2, the coil assembly 52 may include a coil 521 and a base 522 for fixing the coil 521. Optionally, the base 522 is provided with an annular storage groove, and the coil 521 is wound on the base 522 and received in the storage groove. The coil 521 of this embodiment is connected to a wire (not shown), which extends out of the pump body 1. The coil 521 may be connected to a control circuit via the wire, and the control circuit can control the coil 521 to be powered on and powered off alternately. The working mechanism of controlling the coil 521 to be alternately powered on and powered off by the control circuit is known, and will not be repeated herein.

In the embodiment shown in FIG. 2, the diaphragm pump 400 further includes an end cap 20, which covers the bottom of the pump body 1 (the pump cover 2 covers a side wall of the pump body 1). The wire passes through the end cap 20 and exposes from the end cap 20 to facilitate connection with the control circuit.

Optionally, the base 522 is sleeved and fixed on the rod body 511, and the second containing part 7 of the above embodiment is formed by the base 522 and the rod body 511.

In the embodiment shown in FIG. 2, the diaphragm pump 400 may further include a diaphragm support 9, one end of the diaphragm support 9 abuts against a side of the diaphragm 3 away from the pump cover 2, and the other end thereof is connected to the push rod 51. The contact area between the diaphragm support 9 and the side of the diaphragm 3 away from the pump cover 2 is greater than a preset area threshold. By means of abutting against the diaphragm support 9 on the side of the diaphragm 3 away from the pump cover 2 (that is, the side of the diaphragm 3 away from the cavity 4), and the area of the contact surface between the diaphragm support 9 and the side of the diaphragm 3 away from the pump cover 2 is designed as large enough, when the driving mechanism 5 drives the diaphragm 3 to make a reciprocating linear movement relative to the pump cover 2, the diaphragm 3 is limited by the diaphragm support 9, so that the diaphragm 3 reciprocates in the same direction, thereby reducing the movement of the diaphragm 3 in other directions, improving the stress condition of the diaphragm 3, and extending the service life of the diaphragm 3. When the driving mechanism 5 drives the diaphragm 3 to move toward the pump cover 2, due to the abutment of the diaphragm support 9, the diaphragm 3 can be sufficiently pushed to have sufficient deformation. Thus, the volume change of the cavity 4 is ensured, and a pesticide in the cavity 4 can be completely discharged.

In this embodiment, the diaphragm 3 may include a connecting part and a supporting part located on an outer edge of the connecting part. The connecting part is driven to move by the driving mechanism 5, and the supporting part is assembled to the corresponding pump cover 2. The outer edge of the supporting part may be assembled to the pump cover 2 by snapping or other means. Optionally, the thickness of the connecting part is greater than that of other parts of the diaphragm 3. Since the connecting part is driven to move by the driving mechanism 5, the thickness of the connecting part is designed to be thicker. Accordingly, even if the connecting part is worn, it will not affect the movement of the connecting part driven by the driving mechanism 5. The thickness herein refers to the thickness of the diaphragm 3 in its moving direction.

In some embodiments, the diaphragm 3 has a circular shape. Of course, in other embodiments, the diaphragm 3 may also have other regular or irregular shapes.

The preset area threshold can be represented in the form of ratio (the ratio of the contact area between the diaphragm support 9 and the abutting surface to the surface area of the abutting surface, where the abutting surface refers to the surface of the diaphragm 3 away from the pump cover 2). Alternatively, it may be represented by the size of the area. In this embodiment, the ratio of the contact area between the diaphragm support 9 and the abutting surface to the surface area of the abutting surface may be greater than or equal to 80%, such as 85%, 90%, 95%, or 100%.

The preset area threshold may be designed according to the displacement requirements of the diaphragm pump 400. For example, in one of the embodiments, the ratio of the contact area between the diaphragm support 9 and the abutting surface to the surface area of the abutting surface is greater than or equal to 100%, that is, the diaphragm support 9 covers the abutting surface. When the driving mechanism 5 presses the diaphragm 3, under the pressing action of the diaphragm support 9, the surface of the diaphragm 3 facing away from the abutting surface fits the pump cover 2 as much as possible, and the volume of the cavity 4 is sufficiently small. In this way, the pesticide in the cavity 4 is exhausted as much as possible.

In a feasible implementation, the area of the surface of the diaphragm support 9 facing the diaphragm 3 is equal to the area of the abutting surface, or the area of the surface of the diaphragm support 9 facing the diaphragm 3 is slightly larger than the area of the abutting surface. This ensures that the diaphragm support 9 can cover the abutting surface of the diaphragm 3.

In another feasible implementation, the ratio of the contact area between the diaphragm support 9 and the abutting surface to the surface area of the abutting surface is greater than a preset ratio threshold but less than 100%, and the diaphragm support 9 does not fully cover the abutting surface.

In order to better limit the diaphragm 3, ensure that the diaphragm 3 can be fully pushed up, and ensure that the diaphragm 3 has sufficient deformation, in this embodiment, the rigidity of the diaphragm support 9 is greater than a preset rigidity threshold. The preset rigidity threshold can be designed as required, such as 10 N/m. Optionally, the diaphragm support 9 is a rigid part.

In addition, in order to reduce the wear of the diaphragm 3 caused by the diaphragm support 9 during a reciprocating movement, the diaphragm support 9 in this embodiment abuts against a side of the diaphragm 3 away from the pump cover 2 through a cambered surface.

The fixing method between the diaphragm support 9 and the push rod 51 may be any existing fixing method. In this embodiment, the diaphragm support 9 is sleeved over and fixed to an end of the rod body 511. In other embodiments, the diaphragm support 9 may be fixed to an end of the rod body 511 by means of threading, clamping, or the like.

In some embodiments, with reference to FIGS. 2 and 3, the diaphragm pump 400 may further include a connecting part 10, one end of the connecting part 10 is connected to an end of the rod body 511, and the other end thereof is connected to the diaphragm 3. The diaphragm support 9 is sleeved over and fixed to an end of the rod body 511 and the connecting part 10.

In some embodiments, the connecting part 10 is integrally formed on an end of the rod body 511. In other embodiments, the connecting part 10 and the rod body 511 may be arranged independently. Optionally, an insertion groove may be provided at an end of the rod body 511, and the connecting part 10 is inserted into the insertion groove. The connecting part 10 may be a screw or another structural part.

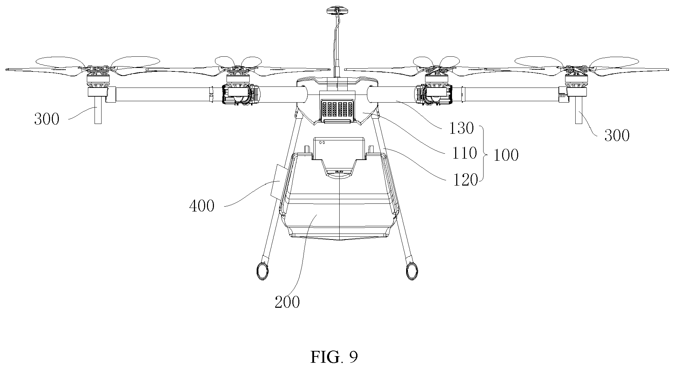

The diaphragm pump 400 of this embodiment may be a single-diaphragm pump or a twin-diaphragm pump. The following embodiments will specifically describe the structure of the single-diaphragm pump and the twin-diaphragm pump. When describing the structures of single-diaphragm pump and twin-diaphragm pump in the following embodiments, the application of the diaphragm pump 400 in agricultural plant protection is taken as an example. As shown in FIG. 9, an agricultural plant protection machine may include a pipe, a storage tank 200 for storing a pesticide, and a spray head 300.

In an embodiment, the diaphragm pump 400 is a single-diaphragm pump, which includes a pump cover 2 and a diaphragm 3. One end of the push rod 51 is connected to the diaphragm 3, and the push rod 51 reciprocates linearly, driving the diaphragm 3 to move toward or away from the pump cover 2. Correspondingly, the cavity 4 becomes smaller or larger. The push rod 51 presses the diaphragm 3 (that is, the push rod 51 drives the diaphragm 3 to move toward the pump cover 2), and the push rod 51 stretches the diaphragm 3 (that is, the push rod 51 drives the diaphragm 3 away from the ump cover 2) so as to form a movement cycle. In this embodiment, the single-diaphragm pump further includes a liquid inlet and a liquid outlet communicating with the cavity 4 respectively. The liquid inlet and the liquid outlet are arranged on the pump body 1. In addition, the liquid inlet is communicated with the liquid outlet through a flow channel. Further, the liquid inlet may be communicated with the liquid storage tank 200 through a pipe, and the liquid outlet may be communicated with the spray head 300 through a pipe.

The process of controlling the flow direction of the pesticide by the single-diaphragm pump includes: when the cavity is reduced, the cavity 4 is communicated with the pile through the liquid outlet, and the liquid inlet is closed. The pesticide in the cavity 4 (the pesticide sucked by the cavity in the first half of the current movement cycle) is discharged to the spray head 300 through the liquid outlet, and the spray head 300 sprays the pesticide to a designated area (farmland, woods, etc.). When the cavity is enlarged, the cavity 4 is directly or indirectly communicated d with a liquid storage tank 200 through the liquid inlet, the liquid outlet is closed, and the pesticide in the liquid storage tank 200 enter the cavity 4 through the liquid inlet.

Optionally, the liquid inlet and the liquid outlet are arranged on the same side of the pump cover 2, which makes the structure of the single-diaphragm pump more compact, and facilitates the miniaturization of the single-diaphragm pump. The single-diaphragm pump has the advantages of small size, light weight and low power consumption, and will not affect the agricultural plant protection machine equipped with it.

In another embodiment, the diaphragm pump 400 is a twin-diaphragm pump. It includes two pump covers 2 and two diaphragms 3. The two pump covers 2 correspond to the two diaphragms 3. The two pump covers 2 respectively cover two sides of the pump body 1. The two diaphragms 3 are respectively assembled on the corresponding pump covers 2. The cavity 4 includes a first cavity and a second cavity formed respectively by the two diaphragms 3 and the corresponding pump covers 2. In this embodiment, an end of the push rod 51 is connected to one of the two diaphragms 3, and the other end of the push rod 51 is connected to the other of the two diaphragms 3. The push rod 51 reciprocates linearly to drive the two diaphragms 3 to move toward or away from the corresponding pump covers 2 respectively, so that the sizes of the first cavity and the second cavity change in opposite directions.

Specifically, the pump covers 2 may include a first pump cover and a second pump cover, and the diaphragms 3 may include a first diaphragm and a second diaphragm. The first diaphragm is coupled with the first pump cover to form a first cavity, and the second diaphragm is coupled with the second pump cover to form a second cavity. In this embodiment, the first diaphragm and the second diaphragm move in opposite directions. When the push rod 51 presses the first diaphragm and stretches the second diaphragm, the first diaphragm moves towards first pump cover, and the second diaphragm moves away from the second pump cover. Thus, the first cavity is reduced and the second cavity is enlarged. When the push rod 51 stretches the first diaphragm and presses the second diaphragm, the first diaphragm moves away from the first pump cover, and the second diaphragm moves toward the second pump cover. As a result, the first cavity is enlarged and the second cavity is reduced. In this embodiment, the push rod 51 presses the first diaphragm and stretches the second diaphragm; the push rod 51 stretches the first diaphragm and presses the second diaphragm. The foregoing two processes form a movement cycle.

Further, the diaphragm pump 400 further includes a first liquid inlet and a first liquid outlet respectively communicating with the first cavity, and a second liquid inlet and a second liquid outlet communicating with the second cavity respectively. The first liquid inlet, the first liquid outlet, the second liquid inlet and the second liquid outlet may be communicated with the pipe. Therefore, the liquid flow direction in the pipe can be controlled by controlling the opening and closing of the first liquid inlet, the first liquid outlet, the second liquid inlet and the second liquid outlet.

The process of controlling the flow direction of the pesticide by the twin-diaphragm pump includes: when the first cavity is reduced and the second cavity is enlarged, the first liquid outlet and the second liquid inlet are communicated with the pipe, and the first liquid inlet and the second liquid inlet are closed. The first liquid outlet and the second liquid inlet are opened under the action of the flow of the pesticide, and the first liquid inlet and the second liquid outlet are closed under the action of the flow of the pesticide. The first cavity discharges the pesticide in the first cavity (the pesticide sucked by the first cavity in the first half of the movement cycle including the current moment) to the spray head 300 through the first liquid outlet and the pipe, and the spray head 300 sprays the pesticide to designated areas (farms, woods, etc.). At the same time, the second cavity sucks the pesticide from the liquid storage tank 200 through the second liquid inlet and the pipe, and stores it in the second cavity. Since the first liquid inlet and the second liquid outlet are closed, the first cavity will not suck pesticide from the liquid storage tank 200 through the first liquid inlet and the pipe. The second cavity also does not discharge the pesticide from the second cavity through the second liquid outlet and the pipe.

When the first cavity is enlarged and the second cavity is reduced, the first liquid inlet and the second liquid outlet are communicated with the pipe, and the first liquid outlet and the second liquid inlet are closed. The first liquid inlet and the second liquid outlet are opened under the action of the flow of the pesticide, and the first liquid outlet and the second liquid inlet are closed under the action of the flow of the pesticide. The second cavity discharges the pesticide in the second cavity (the pesticide sucked by the second cavity in the first half of the movement cycle including the current moment) to the spray head 300 through the second liquid outlet and the pipe. The spray head 300 sprays the pesticide to the designated areas. At the same time, the first cavity sucks the pesticide from the liquid storage tank 200 through the first liquid inlet and the pipe and stores it in the first cavity. Since the first liquid outlet and the second liquid inlet are closed, the first cavity does not discharge the pesticide from the first cavity through the first liquid outlet and the pipe, and the second cavity does not suck the pesticide from the liquid storage tank 200 through the second liquid inlet and the pipe.

When the first cavity sucks the pesticide, the second cavity discharges the pesticide; when the second cavity sucks the pesticide, the first cavity discharges the pesticide. The dual-cavity design ensures the continuity of pesticide discharge, and reduces the flow pulsation; in addition, the two diaphragms 3 are respectively assembled on the corresponding pump covers 2 to form two cavities, which have strong corrosion resistance, and the design of two cavities can increase the flow and pressure of the diaphragm pump 400.

Optionally, the first liquid inlet and the first liquid outlet, and the second liquid inlet and the second liquid outlet are respectively arranged on the same side of the corresponding pump covers 2. The liquid inlet and the liquid outlet are arranged on the same side of the corresponding pump covers 2, accordingly, the structure of the twin-diaphragm pump is more compact, which is conducive to the miniaturization design of the twin-diaphragm pump. The twin-diaphragm pump of this embodiment has the advantages of small size, light weight, and low power consumption, and will not affect the agricultural plant protection machine equipped with it.

In the embodiment shown in FIG. 4, the diaphragm pump 400 may further include a first check valve 40, a second check valve 50, and a valve cover 30. In this embodiment, the liquid inlet and the liquid outlet are respectively communicated with the cavity. The first check valve 40 is used to control the opening and closing of the liquid inlet, and the second check valve 50 is used to control the opening and closing of the liquid outlet. The valve cover 30 of this embodiment is used to fix the first check valve 40 and the second check valve 50. Thus, the first check valve 40 and the second check valve 50 are integrated through the valve cover 30.

In this embodiment, the valve cover 30 is detachably connected to the pump body 1 to fix the first check valve 40 and the second check valve 50 to the pump body 1. Thus, the first check valve 40 and the second check valve 50 are integrated to the pump body 1. Compared with an existing manner in which the check valve of the diaphragm pump 400 is fixed to the diaphragm 3 through a base, the first check valve 40 and the second check valve 50 in this embodiment are integrated to the pump body 1 through the valve cover 30. Therefore, after the diaphragm 3 is disassembled, the first check valve 40 and the second check valve 50 are still integrated to the pump body 1 through the valve cover 30, and will not be affected by the removal of the diaphragm 3. In addition, the valve cover 30 and the pump cover 2 are provided independently. After the pump cover 2 is disassembled, the first check valve 40 and the second check valve 50 are still fixed on the valve cover 30, and will not be affected by the removal of the pump cover 2.

In the diaphragm pump 400 of the embodiments of the present invention, a valve cover 30 that is independent of the pump cover 2 is added. Two check valves (the first check valve 40 and the second check valve 50) are integrated to the valve cover 30. By means of the detachable connection between the valve cover 30 and the pump body 1, the two check valves are integrated to the pump body 1. The two check valves will not be affected by the removal of the pump cover 2 and the diaphragm 3, thus avoiding the risk of losing the check valve(s). In addition, the two check valves are fixed by the valve cover 30, and there is no need to separately design a base for each check valve. In this way, the number of parts is reduced, and the manufacturing and installation costs are saved.

The first check valve 40 in this embodiment includes a first check valve spool 410 and a first elastic member 420. The first check valve spool 410 and the first elastic member 420 are matched. The first check valve spool 410 is fixed to the pump body 1, and the first elastic member 420 is fixed to the valve cover 30. Specifically, an end of the first check spool 410 is fixedly connected to the first elastic member 420, and other end thereof is fixedly connected to the pump body 1; an end of the first elastic member 420 far away from the first check valve spool 410 is fixedly connected to the valve cover 30.

The fixing manner of the first check valve spool 410 and the pump body 1 can be set as needed. The first check valve spool 410 may be directly or indirectly fixed to the pump body 1. In one of the embodiments, the first check valve spool 410 may be indirectly fixed to the pump body 1 via a valve seat. In another embodiment, referring to FIG. 4, the pump body 1 is provided with a first slot (not shown), and the first check valve spool 410 is inserted in the first slot.

The fixing manner of the first elastic member 420 and the valve cover 30 may also be set as needed. Referring to FIG. 4 again, the valve cover 30 is provided with a first fixing part 310, and the first elastic member 420 is sleeved over and fixed to the first fixing part 310. Optionally, the first slot and the first fixing part 310 are disposed opposite to each other, making the structure more compact. In this embodiment, the first elastic member 420 is a spring, one end of which is sleeved over and fixed to the first fixing part 310, and the other end thereof is sleeved over and fixed to the first check valve spool 410. It can be understood that the first elastic member 420 may also be another elastic structure, and the fixing manner of the first elastic member 420 and the valve cover 30 is not limited to the above-mentioned implementation manner.

Also referring to FIG. 4, the second check valve 50 may include a second check valve spool 510 and a second elastic member 520. The second check valve spool 510 is matched with the second elastic member 520, the second check valve spool 510 is fixed to the valve cover 30, and the second elastic member 520 is fixed to the pump body 1. Specifically, an end of the second check valve spool 510 is fixedly connected to the second elastic member 520, and the other end thereof is fixedly connected to the valve cover 30. An end of the second elastic member 520 away from the second check valve spool 510 is fixedly connected to the pump body 1.

The fixing manner of the second check valve spool 510 and the valve cover 30 can be set as needed. The second check valve spool 510 may be directly or indirectly fixed to the valve cover 30. In one of the embodiments, the second check valve spool 510 may be indirectly fixed to the valve cover 30 through a valve seat. In another embodiment, referring to FIG. 4, the valve cover 30 is provided with a second slot (not shown), and the second check valve spool 510 is inserted in the second slot.

The fixing manner of the second elastic member 520 and the pump body 1 may also be set as needed. Referring to FIG. 4 again, the pump body 1 is provided with a second fixing part 13, and the second elastic member 520 is sleeved over and fixed to the second fixing part 13. Optionally, the second slot and the second fixing part 13 are arranged opposite to each other, making the structure more compact. In this embodiment, the second elastic member 520 is a spring, an end of which is sleeved over and fixed to the second fixing part 13, and the other end thereof is sleeved over and fixed to the second check valve spool 510. It can be understood that the first elastic part 420 may also be another elastic structure, and the fixing manner between the second elastic member 520 and the pump body 1 is not limited to the above-mentioned implementation manner.

In this embodiment, the first fixing part 310 and the second slot are provided on the valve cover 30 at an interval. Optionally, the valve cover 30 has a containing slot, and both the first protrusion and the second slot are received in the containing slot. In this way, the design of the valve cover 30 is more reasonable and compact.

The valve cover 30 and the pump body 1 may be fixedly connected by means of any available detachable connection manner, such as threaded or snapped connection.

In order to make the product structure more compact, the valve cover 30 in this embodiment may be arranged between the pump body 1 and the pump cover 2. In an embodiment, the pump cover 2 may be detachably connected to the pump body 1, but is separated from the valve cover 30 or in contact with the valve cover 30 but not connected thereto. When the diaphragm 3 is damaged, the pump cover 2 can be removed from the pump body 1 to facilitate the maintenance and replacement of the diaphragm 3. After the pump cover 2 is removed, the first check valve 40 and the second check valve 50 are still fixed to the pump body 1 via the valve cover 30. It can be seen that the removal of the pump cover 2 will not affect the first check valve 40 and the second check valve 50. The connection manner between the pump cover 2 and the pump body 1 may be any available detachable connection manner, such as threaded or snapped connection.

In another embodiment, the pump cover 2 is detachably connected to the pump body 1 and the valve cover 30, respectively. After the diaphragm 3 is damaged, the pump cover 2 can be removed from the pump body 1 and the valve cover 30 to facilitate the maintenance and replacement of the diaphragm 3. After the pump cover 2 is removed, the first check valve 40 and the second check valve 50 are still fixed to the pump body 1 via the valve cover 30. It can be seen that the removal of the pump cover 2 will not affect the first check valve 40 and the second check valve 50. The connection manner between the pump cover 2 and the pump body 1, the valve cover 30 can be any available detachable connection manner, such as threaded or snapped connection.

In the twin-diaphragm pump, the first check valve 40 may include a first liquid inlet check valve for controlling the opening and closing of the first liquid inlet and a second liquid inlet check valve for controlling the opening and closing of the second liquid inlet. The second check valve 50 includes a first liquid outlet check valve for controlling the opening and closing of the first liquid outlet and a second liquid outlet check valve for controlling the opening and closing of the second liquid outlet. When the first cavity is reduced and the second cavity is enlarged, the first liquid outlet check valve and the second liquid inlet check valve are opened, and the first liquid inlet check valve and the second liquid outlet check valve are closed. So that the first liquid outlet and the second liquid inlet are in communication with the pipe, and the first liquid inlet and the second liquid outlet are closed. When the first cavity is enlarged and the second cavity is reduced, the first liquid inlet check valve and the second liquid outlet check valve are opened, and the first liquid outlet check valve and the second liquid inlet check valve are closed. Such that the first liquid inlet and the second liquid outlet are in communication with the pipe, the first liquid outlet and the second liquid inlet are closed.

The valve cover 30 may include a first valve cover and a second valve cover. The first liquid inlet check valve and the first liquid outlet check valve are fixed to the first valve cover. In addition, the first liquid inlet check valve and the first liquid outlet check valve are detachably fixed to the pump body 1 via the first valve cover. The second liquid inlet check valve and the second liquid outlet check valve are fixed to the second valve cover. In addition, the second liquid inlet check valve and the second liquid outlet check valve are detachably fixed to the pump body 1 via the second valve cover. Specifically, the first valve cover is detachably connected to a side of the pump body 1 facing the first pump cover 2 so as to fix the first liquid inlet check valve and the first liquid outlet check valve to the pump body 1. The second valve cover is detachably connected to a side of the pump body 1 facing the second pump cover 2 so as to fix the second liquid inlet check valve and the second liquid outlet check valve to the pump body 1.

In this embodiment, the first liquid inlet check valve is arranged opposite to the second liquid inlet check valve, and the first liquid outlet check valve is arranged opposite to the second liquid outlet check valve, so that the structure of the twin-diaphragm pump becomes more compact, which is conducive to the miniaturization design of the twin-diaphragm pump.

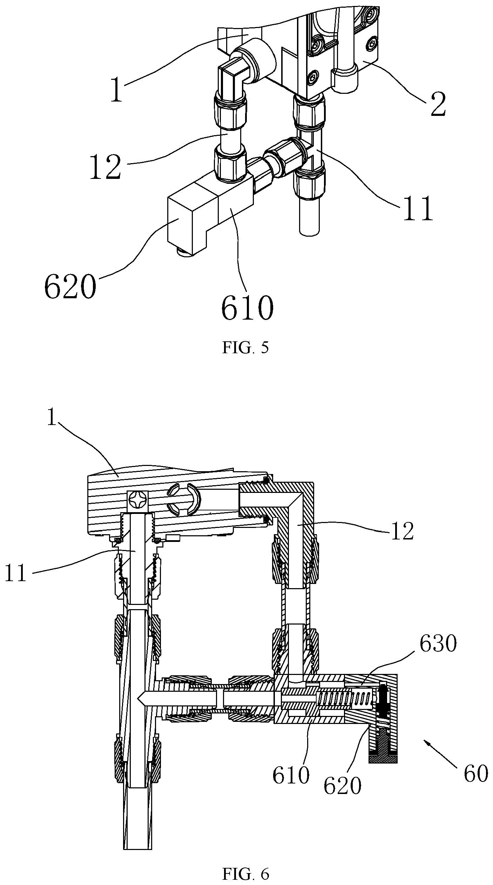

With reference to FIGS. 5 to 8, the diaphragm pump 400 may further include a pressure relief device 60. The pressure relief device 60 is installed on the liquid outlet 12. When the hydraulic pressure in the pump body 1 exceeds a preset pressure threshold, the pressure relief device 60 is opened to provide overpressure protection to the diaphragm pump 400. The pressure relief device 60 may include a main valve 610, a pilot valve 620 connected to the main valve 610, and a drainage channel 630. The main valve 610 may include a liquid inlet part 611, a liquid outlet part 612, and a first spool 613. The liquid inlet part 611 communicates with the liquid outlet 12, and the liquid outlet part 612 communicates with the liquid inlet 11. The first spool 613 may seal the liquid inlet part 611 and the liquid outlet part 612. The pilot valve 620 may include a second spool 621 and a first channel 622. One end of the first valve spool 613 away from the liquid outlet part 612 is movable and sealed in the first channel 622. One end of the drainage channel 630 is in communication with the liquid outlet 12, and the other end of the drainage channel 630 is provided with a first drainage port 631. The second spool 621 may seal the first drainage port 631 so as to separate the drainage channel 630 from the first channel 622.

In this embodiment, when the hydraulic pressure in the pump body 1 exceeds the preset pressure threshold, the second spool 621 is separated from the first drainage port 631 under the action of the pressing force of the pesticide. The pesticide enters the first channel 622, so that a pressure difference formed between the end of the first spool 613 close to the liquid outlet part 612 and the end of the first valve spool 613 away from the liquid outlet part 612. The first spool 613 may be separated from the liquid inlet part 611 and the liquid outlet part 612 under the action of the pressing force of the pesticide in the liquid outlet part 612. The pesticide flows out from the liquid outlet part 612 and overflows back to the liquid inlet 11 to provide the overpressure protection to the diaphragm pump 400. Specifically, after the second spool 621 is separated from the first drainage port 631, the drainage channel 630 communicates with the first channel 622, and the pesticide in the drainage channel 630 may flow into the first channel 622 through the first drainage port 631. At this time, the hydraulic pressure at the end of the first spool 613 close to the liquid outlet part 612 is the hydraulic pressure in the pump body, and the hydraulic pressure at the end of the first spool 613 far away from the liquid outlet part 612 (that is, the hydraulic pressure of the pesticide in the first channel 622) is less than that in the pump body. Therefore, the hydraulic pressure at the end of the first spool 613 close to the liquid outlet part 612 is greater than the hydraulic pressure at the end of the first spool 613 far away from the liquid outlet part 612. When the pressure difference is greater than a preset pressure difference threshold, the first spool 613 may move under the action of the pressing force of the pesticide in the liquid outlet part 612 to be separated from the liquid inlet part 611 and the liquid outlet part 612 (partially separated or completely separated). The pesticide flowing out of the liquid outlet 12 passes through the liquid inlet part 611 and flows into the liquid outlet part 612, and then overflows back to the liquid inlet 11 and enters the pump body 1.

When the hydraulic pressure in the pump body 1 does not exceed the preset pressure threshold, the second spool 621 seals the first drainage port 631, and the pilot valve 620 is in a closed state. At this time, there is no pressure difference between the end of the second spool 621 close to the liquid outlet part 612 and the end of the first spool 613 far away from the liquid outlet part 612, so the first spool 613 seals the liquid inlet part 611 and the liquid outlet part 612. That is, the main valve 610 is also in the closed state; the diaphragm pump 400 works as normal.

It should be noted that the preset pressure threshold is the maximum hydraulic pressure that the diaphragm pump 400 can withstand in normal operation. Once the hydraulic pressure in the pump body 1 exceeds the preset pressure threshold, the diaphragm pump 400 may be damaged.

Generally, the rigidity of the main valve 610 needs to be designed to be high in order to better seal the liquid inlet part 611 and the liquid outlet part 612. So that when the hydraulic pressure in the pump body 1 does not exceed the preset pressure threshold, the diaphragm pump 400 operates normally, and the diaphragm pump 400 does not release pressure through the pressure relief device 60. The rigidity of the main valve 610 needs to be designed to be high. If the main valve 610 is directly used to relieve pressure, the hydraulic pressure in the pump body 1 may exceed the preset pressure threshold before the main valve 610 can be opened by the pressing force of the pesticide. In fact, the diaphragm pump 400 may be damaged when the hydraulic pressure in the pump body 1 just exceeds the preset pressure threshold. Therefore, a pilot valve 620 with the relatively lower rigidity is added to the main valve 610. Once the hydraulic pressure in the pump body 1 exceeds the preset pressure threshold, the pilot valve 620 is opened, which triggers the main valve 610 to open for pressure relief, so as to ensure the timeliness of pressure relief, and improve the accuracy of pressure stabilization.

In the diaphragm pump 400 of the embodiments of the present invention, a pressure relief device 60 may be provided to the liquid outlet 12. The overpressure protection of the diaphragm pump 400 can be realized, and the pressure of the liquid outlet 12 is guaranteed to be constant, thereby ensuring the consistency of the flow. In addition, when the hydraulic pressure in the pump body 1 exceeds a preset pressure threshold, the pilot valve 620 is firstly opened, then the pilot valve 620 triggers the opening of the main valve 610 to achieve pressure relief. The coupling between the main valve 610 and the pilot valve 620 can improve the accuracy of pressure stabilization; in addition, the pressure relief device 60 adopts an open-loop control, which has a timely response, high stability and low costs.

In some embodiments, the diameters of the liquid inlet 11 and the liquid outlet 12 are approximately the same; of course, in some embodiments, the diameters of the liquid inlet 11 and the liquid outlet 12 may be set to different sizes.

In some embodiments, the diameters of the liquid inlet part 611 and the liquid outlet part 612 are approximately the same. Of course, in some embodiments, the diameters of the liquid inlet part 611 and the liquid outlet part 612 can also be set to different sizes.

Optionally, in some embodiments, the diameter of the liquid inlet part 611 and the diameter of the liquid outlet part12 are approximately equal in size. Of course, in some embodiments, the diameter of the liquid inlet part 611 may also be designed as smaller than that of the liquid outlet 12 so as to facilitate the installation between the liquid inlet part 611 and the liquid outlet 12. The liquid inlet part 611 of this embodiment may be inserted into the liquid outlet 12 to realize the communication between the liquid inlet part 611 and the liquid outlet 12. In order to prevent the pesticide from leaking from the connection between the liquid inlet part 611 and the liquid outlet 12, a sealing structure, such as a rubber layer, may be provided at the connection between the liquid inlet part 611 and the liquid outlet 12. Optionally, the liquid inlet part 611 may be connected to the liquid outlet 12 by an existing method such as a snap connection or a threaded connection.

Optionally, in some embodiments, the diameters of the liquid outlet part 612 and the liquid inlet 11 are approximately the same. Of course, in some embodiments, the caliber of the liquid outlet part 612 can also be designed to be smaller than the caliber of the liquid inlet 11 to facilitate the installation between the liquid outlet part 612 and the liquid inlet 11. The liquid outlet part 612 of this embodiment can be inserted into the liquid inlet 11 to realize the communication between the liquid outlet part 612 and the liquid inlet 11. In order to prevent pesticides from leaking from the connection between the liquid outlet part 612 and the liquid inlet 11, a sealing structure, such as a rubber layer, can be provided at the connection between the liquid outlet part 612 and the liquid inlet 11. Optionally, the liquid outlet portion 612 may be connected to the liquid inlet 11 through existing methods, such as threaded or snapped connection.

The diameter of the drainage channel 630 is smaller than the diameter of the liquid outlet part 612, so as to ensure that when the hydraulic pressure in the pump body 1 does not exceed the preset pressure threshold, the second spool 621 is not separated from the first drainage port 631 under the action of the pressing force of the pesticide. That is, the diameter of the drainage channel 630 is designed to be smaller than that of the liquid outlet part 612, so as to ensure that when the hydraulic pressure in the pump body 1 does not exceed the preset pressure threshold, the second spool 621 can tightly seal the first drainage port 631.

In some embodiments, the diameter of the drainage channel 630 may be greater than or equal to 1/10 of the diameter of the liquid outlet part 612, and less than or equal to 1/5 of the diameter of the liquid outlet part 612. For example, the diameter of the drainage channel 630 may be 1/10, 1/9, 1/8, 1/7, 1/6 or 1/5 of the diameter of the liquid outlet part 612, and the diameter of the drainage channel 630 may be selected as needed.

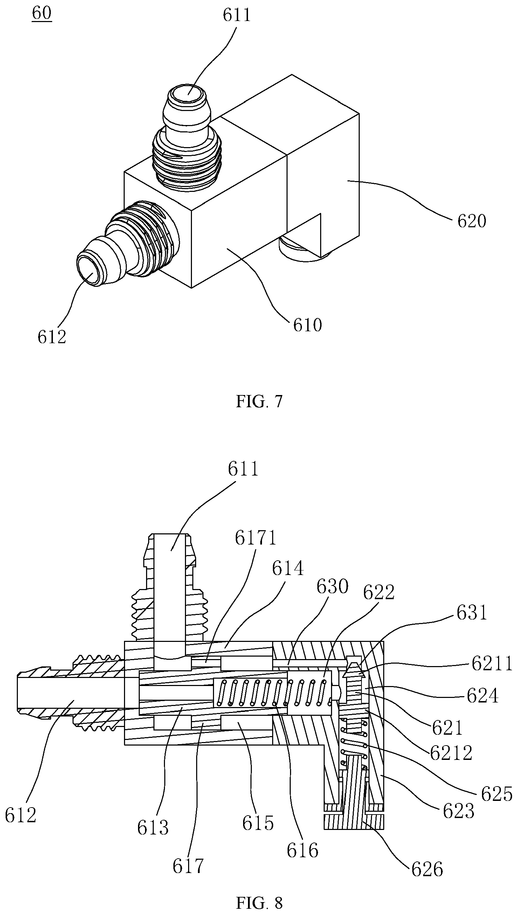

Referring to FIG. 8, the main valve 610 may include a first valve body 614, the first valve body 614 may be provided with a third cavity 615, and the liquid inlet part 611 and the liquid outlet part 612 are respectively arranged on the first valve body 614. In addition, the liquid inlet part 611 and the liquid outlet part 612 are respectively communicated with the third cavity 615. In this embodiment, the first spool 613 is movably arranged in the third cavity 615. When the hydraulic pressure in the pump body 1 does not exceed the preset pressure threshold, the first spool 613 seals the liquid inlet part 611 and the liquid outlet part 612; when the hydraulic pressure in the pump body 1 exceeds the preset pressure threshold, the first spool 613 is under the action of the pressing force of the pesticide in the liquid inlet part 611 to move within the third cavity 615 in a direction away from the liquid inlet part 611, so as to be separated from the liquid inlet part 611 and the liquid outlet part 612.

In order to allow the first valve 613 to move within the third cavity 615, in some embodiments, an outer side wall of the first spool 613 is provided with a first sliding protrusion 617, and the first sliding protrusion 617 is in sliding connection with an inner side wall of the first valve body 614. Optionally, the first sliding protrusion 617 has an annular structure. Of course, the first sliding protrusion 617 is not limited to a ring-shape structure, and may also has another shape. Optionally, the first sliding protrusion 617 is integrally formed on the first spool 613. It can be understood that other structural manners may also be adopted to realize that the first spool 613 is movable within the third cavity 615.

Optionally, referring to FIG. 8 again, the first sliding protrusion 617 is provided with a second drainage port 6171, and the liquid outlet 12 communicates with the drainage channel 630 through the liquid inlet part 611 and the second drainage port 6171. In this embodiment, the drainage channel 630 communicates with the third cavity 615. Moreover, when the hydraulic pressure in the pump body 1 does not exceed the preset pressure threshold, there is a gap between the second drainage port 6171 and the drainage channel 630. When the hydraulic pressure in the pump body 1 exceeds a preset pressure threshold, this gap may allow the first spool 613 to move.

Referring to FIG. 8 again, the pilot valve 620 may further include a second valve body 623, and the second valve body 623 may be provided with a fourth cavity 624. The first channel 622 communicates with the fourth cavity 624, and the second spool 621 is movably disposed in the fourth cavity 624. In this embodiment, the first channel 622 communicates with the drainage channel 630 through the fourth cavity 624. Further, the first valve body 614 and the second valve body 623 are fixedly connected, thereby fixing the pilot valve 620 to the main valve 610. In addition, the pilot valve 620 may seal the main valve 610. The first valve body 614 and the second valve body 623 may be fixedly connected by any available connection manners, such as threaded or snapped connection.

Optionally, the second spool 621 may include a sealed end 6211, and the sealed end 6211 is inserted in the first drainage port 631. The sealed end 6211 is tapered, which can better seal the first drainage port 631. Of course, the sealed end 6211 is not limited to the tapered shape, and the sealing manner of the sealed end 6211 and the first drainage port 631 is not limited to the manner of insertion. The sealed end 6211 in another shape may also be used, and the sealed end 6211 and the first drainage port 631 may also be sealed by other matching manners.

In order to allow the second spool 621 to move within the fourth cavity 624, in some embodiments, a side wall of the second spool 621 is provided with a second sliding protrusion 6212, and the second sliding protrusion 6212 is in sliding connection with an inner side wall of the second valve body 623. Optionally, the second sliding protrusion 6212 has a ring-shape structure. Of course, the second sliding protrusion 6212 is not limited to the ring-shape structure, and may have another shape. Optionally, the second sliding protrusion 6212 is integrally formed on the second spool 621. It can be understood that other structural manner may also be used to realize that the second spool 621 is movable within the fourth cavity 624.

In some embodiments, as shown in FIG. 8, the drainage channel 630 may be arranged in the second valve body 623, which facilitates a compact design of the structure. In this embodiment, when the second spool 621 seals the first drainage port 631, the drainage channel 630 is separated from the fourth cavity 624, so that the drainage channel 630 is separated from the first channel 622; when the second spool 621 is separated from the first drainage port 631, the drainage channel 630 communicates with the fourth cavity 624, so that the drainage channel 630 communicates with the first channel 622. It can be understood that, in some embodiments, the drainage channel 630 may also be arranged outside the second valve body 623.

Referring to FIG. 8 again, the main valve 610 may further include a first elastic reset member 616 contained in the third cavity 615. One end of the first elastic reset member 616 is connected to the first spool 613, and the other end thereof is contained in the first channel 622 and connected to the second valve body 623. The first elastic reset member 616 is used to provide an elastic restoring force to the first spool 613. In addition, under the action of the elastic restoring force of the first elastic reset member 616, the first spool 613 may seal the liquid inlet part 611 and the liquid outlet part 612.

Specifically, when the hydraulic pressure in the pump body 1 does not exceed the preset pressure threshold (that is, the diaphragm pump 400 is in normal operation), under the elastic restoring force of the first elastic reset member 616, the first spool 613 seals the liquid inlet part 611 and liquid outlet part 612. When the hydraulic pressure in the pump body 1 exceeds the preset pressure threshold, the hydraulic pressure at the end of the first spool 613 close to the liquid outlet part 612 is greater than the hydraulic pressure at the end of the first valve spool 613 far away from the liquid outlet part 612. When the pressing force of the pesticide in the liquid outlet part 612 overcomes the elastic restoring force of the first elastic member 420 and the pressing force of the pesticide in the first channel 622, the first spool 613 moves to the right (as shown in the embodiment of FIG. 8), and the first elastic reset member 616 is gradually compressed. When the first spool 613 moves to be separated from the liquid inlet part 611 and the liquid outlet part 612, the pesticide flowing out from the liquid outlet 12 further flows into the liquid outlet part 612 through the liquid inlet part 611, and then overflows back into the liquid inlet 11, and enters the pump body 1 to achieve pressure relief. In addition, during the pressure relief process, the pressure difference between the end of the first spool 613 close to the liquid outlet part 612 and the end of the first spool 613 far away from the liquid outlet part 612 gradually decreases until their pressure difference becomes zero. The first elastic member 420 is gradually stretched, and the first spool 613 is gradually reset under the action of the elastic restoring force of the first elastic member 420 (the elastic restoring force generated in the process of the first elastic member 420 being gradually stretched from the compressed state). The liquid inlet part 611 and the liquid outlet part 612 are sealed again, so as to ensure that the diaphragm pump 400 returns to a normal operating state.

In some embodiments, the end of the first spool 613 far away from the liquid inlet 11 is further provided with a mounting slot, and one end of the first elastic reset member 616 is installed in the mounting slot, so as to better fix the first elastic member 420 and prevent the main valve 610 from failing due to the instability of the first reset member. Of course, other methods may also be used to fix the first elastic member 420 to the first spool 613.

Referring to FIG. 8, the pilot valve 620 may further include a second elastic reset member 625 contained in the fourth cavity 624, and the second elastic reset member 625 is connected to the second spool 621 for providing an elastic restoring force to the second spool 621. Under the action of the elastic restoring force of the second elastic reset member 625, the second spool 621 may seal the first drainage port 631.

Specifically, when the diaphragm pump 400 is in a normal operating state, the second spool 621 seals the first drainage port 631 under the action of the elastic restoring force of the second elastic reset member 625. When the spray head 300 is blocked and the hydraulic pressure in the pump body 1 exceeds the preset pressure threshold, the pesticide in the drainage channel 630 presses the second spool 621. The second elastic reset member 625 is gradually compressed; when the pressing force of the pesticide overcomes the elastic restoring force applied to the first spool 613 by the second elastic reset member 625, the second spool 621 is pushed open and separated from the first drainage port 631, and the pesticide in the drainage channel 630 enters the first channel 622 through the fourth cavity 624.

During the pressure relief process, the second elastic reset member 625 is gradually stretched, and the second spool 621 is gradually reset under the action of the restoring force of the second elastic reset member 625 to seal the first drainage port 631 again, so as to ensure that the diaphragm pump 400 returns to a normal operating state.

In this embodiment, the preset pressure threshold and the pressing force of the pesticide on the second valve spool 621 are positively correlated with the elastic restoring force of the second elastic member 520, that is, the greater the elastic restoring force of the second elastic member 520, the higher the preset pressure threshold and the pressing force of the pesticide on the second spool 621.

The second elastic reset member 625 may apply different magnitudes of elastic restoring forces to the second spool 621, which can be implemented based on different structures. For example, in one of the implementation manners, the second valve body 623 may further have an opening part, and the opening part is in communication with the fourth cavity 624. The second elastic reset member 625 may be movably inserted in the opening part. When the second elastic reset member 625 moves to different positions within the opening part relative to the opening part, the second elastic reset member 625 may apply elastic restoring forces of different magnitudes to the second spool 621. Optionally, the second elastic reset member 625 is pressed in the opening part. By pressing an end of the second elastic reset member 625 far away from the second spool 621, the second elastic reset member 625 is gradually compressed, and the elastic restoring force applied to the second valve spool 621 by the second elastic reset member 625 becomes gradually greater, and the pressing force required for the pesticide to open the second spool 621 also becomes gradually greater. By pulling one end of the second elastic reset member 625 far away from the second spool 621, the second elastic reset member 625 is gradually stretched yet the second spool 621 is not separated from the first drainage port 631. Accordingly, the pressing force required for the pesticide to open the second spool 621 becomes gradually smaller. In order to meet the requirements of different diaphragm pumps 400 for overpressure protection (the maximum hydraulic pressure that different diaphragm pumps 400 can withstand is different), the position of the second elastic reset member 625 in the first opening part can be moved as needed. In this implementation manner, the second elastic reset member 625 may be made of a flexible material, such as rubber, plastic and other flexible materials.

In another implementation, the pilot valve 620 may further include an adjustment member 626. The adjustment member 626 is coupled with the second elastic reset member 625 to adjust the elastic restoring force of the second elastic reset member 625, such that the second elastic reset member 625 may apply elastic restoring forces of different magnitudes to the second spool 621. Specifically, the second valve body 623 also has an opening part, and the opening part is in communication with the fourth cavity 624. One end of the second elastic reset member 625 is connected to the second spool 621, and the other end of the second elastic reset member 625 is connected to the adjustment member 626, which is rotatable inserted in the opening part. When the adjustment member 626 rotates within the opening part relative to the opening part, the adjustment member 626 can drive the expansion and contraction of the second elastic reset member 625 to adjust the elastic restoring force of the second elastic reset member 625. Specifically, when the adjustment member 626 rotates in a first direction in the first opening part, the adjustment member 626 may move toward the second spool 621, so that the second elastic reset member 625 is gradually compressed. The elastic restoring force applied by the second elastic reset member 625 to the second spool 621 becomes gradually greater, and the pressing force required for the pesticide to open the second spool 621 also becomes gradually greater. When the adjustment member 626 rotates in a second direction in the opening part, the adjustment member 626 moves away from the second spool 621. Accordingly, the second elastic reset member 625 is gradually stretched, yet the second valve spool 621 is not separated from the first drainage port 631. The elastic restoring force applied by the second elastic reset member 625 to the second spool 621 becomes gradually smaller, and the pressing force required for the pesticide to open the second spool 621 also becomes smaller. The first direction is different from the second direction. Optionally, the first direction is a clockwise direction, and the second direction is a counterclockwise direction. In order to meet the requirements of different diaphragm pumps 400 for overpressure protection (the maximum hydraulic pressure that different diaphragm pumps 400 can withstand is different), the adjustment member 626 may be rotated as needed.

The type of adjustment member 626 may also be selected as needed. Optionally, the adjustment member 626 may be a threaded part, such as a screw, and the threaded part is connected to the first opening part through a thread rotation. As a feasible implementation manner, the second elastic reset member 625 is a spring, and the adjustment member 626 is a screw. One end of the spring is sleeved over a fixed end, and the other end thereof is sleeved over the screw.

In addition, in order to facilitate a user to adjust the expansion and contraction of the second elastic reset member 625, a part of the adjustment member 626 may penetrate the first opening part and be exposed outside the opening part for the user to adjust.

The types of the first elastic reset member 616 and the second elastic reset member 625 may be selected as needed. In some embodiments, the first elastic reset member 616 and/or the second elastic reset member 625 are springs. In other embodiments, the first elastic reset member 616 and/or the second elastic reset member 625 are made of a flexible material, such as rubber, plastic, and other flexible materials.

Optionally, the rigidity of the first elastic reset member 616 may be greater than the rigidity of the second elastic reset member 625, so that the rigidity of the main valve 610 is greater than the rigidity of the pilot valve 620, thereby improving the accuracy of pressure stabilization of the pressure relief device 60.

Since the diaphragm pump 400 of this embodiment is applied to an agricultural plant protection machine, there are certain requirements for the corrosion resistance of the pressure relief device 60. In some embodiments, the pressure relief device 60 needs to be made of a material with good corrosion resistance. Optionally, the material of the first spool 613 and/or the second spool 621 includes one of brass, stainless steel, and plastic. It can be understood that the first spool 613 and the second spool 621 can also be made of other materials with good corrosion resistance.

In some embodiments, in the pressure relief device 60, a corrosion-resistant layer may be provided on the surfaces of certain portions in contact with the pesticide. For example, in some embodiments, an inner side wall of the first valve body 614 and/or an inner side wall of the second valve body 623 and/or a surface of the first spool 613 and/or a surface of the second spool 621 may be coated with a corrosion-resistant layer.

Referring to FIG. 9, an embodiment of the present invention provides an agricultural plant protection machine, including a frame 100, a liquid storage tank 200 for storing a pesticide, a pipe communicating with the liquid storage tank 200, a plurality of spray heads 300, and the diaphragm pump 400 of the above embodiments. The diaphragm pump 400 can pump the pesticide from the liquid storage tank 200 to the spray heads 300, and then the spray heads 300 spray the pesticide on the crops.

The agricultural plant protection machine in this embodiment may be a plant protection drone, a pesticide spraying vehicle, or a manual spraying device.

In this embodiment, the liquid inlet 11 of the diaphragm pump 400 communicates with the liquid storage tank 200 through a pipe, and the liquid outlet 12 of the diaphragm pump 400 communicates with the spray heads 300 through a pipe. The diaphragm pump 400 pumps the pesticide from the storage tank 200 to the spray heads 300, and the spray heads 300 then spray the pesticide onto the crops. It can be understood that when the diaphragm pump 400 is a twin-diaphragm pump, the liquid inlet 11 includes a first liquid inlet and a second liquid inlet, and the liquid outlet 12 includes a first liquid outlet and a second liquid outlet.

In this embodiment, the diaphragm pump 400 is fixedly connected to the frame 100. Taking a plant protection drone as an example, the frame 100 may include a body 110 and a landing gear 120 connected to a bottom portion of the body 110. The pump body 1 or the pump cover 2 of the diaphragm pump 400 is installed on the landing gear 120. The fixed connection between the pump body 1 or the pump cover 2 and the bottom portion of the landing gear 120 may be any available fixing manner, such as threaded or snapped connection.

Referring to FIG. 9 again. The frame 100 may further include an arm 130 connected to the body 110, and the spray heads 300 are arranged at an end of the arm 130 far away from the body 110.

It should be noted that the relational terms herein such as first and second are only used to distinguish one entity or operation from another entity or operation. It is not necessary that these terms require or imply any such actual relationship or order between these entities or operations. The terms "include", "comprise" or any other variations thereof are intended to cover non-exclusive inclusion, so that a process, method, article or device including a series of elements includes not only those elements, but also other elements not explicitly listed, or elements inherent to the process, method, article, or device. If there are no more restrictions, an element defined by "including a ... " does not exclude the existence of other same element(s) in the process, method, article, or device that includes the element.

The agricultural plant protection machine and its diaphragm pump provided by the embodiments of the present invention are described in detail above. Specific examples are used herein to illustrate the principles and implementations of the present invention. The description of the above examples is only used to help understand the method and core idea of the present invention; at the same time, for those of ordinary skill in the art, according to the present invention, there may be changes in the specific implementations and scopes of application. In summary, the contents provided herein should not be construed as limiting the present invention.

## Claims

1. A diaphragm pump of an agricultural plant protection machine, **characterized in that** the diaphragm pump comprises:
a pump body including a containing cavity;
a pump cover arranged on the pump body;
a diaphragm in the containing cavity, the diaphragm being coupled with the pump cover, so that the diaphragm and the pump cover surround to form a cavity; and
a driving mechanism in the containing cavity, the driving mechanism including a push rod, a coil assembly and an elastic reset member, the push rod being connected to the diaphragm, and connected to the elastic reset member;
when the coil assembly is powered on and powered off alternately, the push rod makes a reciprocating linear motion to drive the diaphragm to reciprocate relative to the pump cover so as to reduce or enlarge the cavity;
wherein, when the coil assembly is powered on, the push rod moves along a forward direction under a magnetic attraction force from the coil assembly; when the coil assembly is powered off, the push rod moves along a backward direction under an elastic force from the elastic reset member, and the forward direction and the backward direction are two opposite directions.

2. The diaphragm pump according to claim 1, **characterized in that** the push rod includes a rod body to connect the diaphragm and a protrusion on a side wall of the rod body, the protrusion and the coil assembly are spaced apart;
when the coil assembly is powered on, the protrusion moves along the forward direction under the magnetic attraction force of the coil assembly to drive the rod body to move along the forward direction.

3. The diaphragm pump according to claim 2, **characterized in that** the protrusion is directly opposite to the coil assembly.

4. The diaphragm pump according to claim 2 or 3, **characterized in that** the protrusion is a ring-shape structure, and the coil assembly is sleeved over and fixed to the rod body.

5. The diaphragm pump according to claim 2, **characterized in that** the elastic reset member is sleeved over the rod body, an end of the elastic reset member is connected to the protrusion, and another end of the elastic reset member is connected to the coil assembly.

6. The diaphragm pump according to claim 5, **characterized in that** a first containing part is arranged between the protrusion and the rod body, a second containing part is arranged between the coil assembly and the rod body;
an end of the elastic reset member is contained in the first containing part, and another end of the elastic reset member is contained in the second containing part.

7. The diaphragm pump according to claim 1, **characterized in that** the diaphragm pump further comprises a quick release member, and the coil assembly is fixed to the pump body via the quick release member.

8. The diaphragm pump according to claim 1, **characterized in that** the diaphragm pump further comprises a diaphragm support, an end of the diaphragm support abuts against a side of the diaphragm far away from the pump cover, and another end of the diaphragm support is connected to the push rod;
wherein a contact area between the diaphragm support and the side of the diaphragm far away from the pump cover is greater than a preset area threshold.

9. The diaphragm pump according to claim 8, **characterized in that** the diaphragm support abuts against the side of the diaphragm far away from the pump cover through a cambered surface.

10. The diaphragm pump according to claim 9, **characterized in that** a rigidity of the diaphragm support is greater than a preset rigidity threshold.

11. The diaphragm pump according to claim 8, **characterized in that** the diaphragm support covers the side of the diaphragm far away from the pump cover.

12. The diaphragm pump according to claim 8, **characterized in that** the diaphragm support is sleeved over and fixed to an end of the push rod.

13. The diaphragm pump according to claim 1, **characterized in that** the diaphragm pump further comprises a connecting part, an end of the connecting part is connected to an end of the push rod, and another end of the connecting part is connected to the diaphragm.

14. The diaphragm pump according to claim 1, 2 or 8, **characterized in that** the pump cover includes two pump covers, the diaphragm includes two diaphragms, the two pump covers correspond to and cooperate with the two diaphragms;
wherein the two pump covers are respectively arranged on two sides of the pump body, the two diaphragms are respectively installed on the corresponding pump covers, the cavity includes a first cavity and a second cavity, which are respectively surrounded by the two diaphragms and the corresponding two pump covers;
an end of the push rod is connected to one of the two diaphragms, and another end of the push rod is connected to the other of the two diaphragms;
the push rod drives the two diaphragms to move toward or away from the corresponding pump covers, so that a volume change of the first cavity is opposite of a volume change of the second cavity.

15. The diaphragm pump according to claim 14, **characterized in that** the agricultural plant protection machine includes a pipe;
the diaphragm pump further comprises a first liquid inlet and a first liquid outlet respectively connected to the first cavity, and a second liquid inlet and a second liquid outlet respectively connected to the second cavity, the first liquid inlet and the first liquid outlet, the second liquid inlet and the second liquid outlet are respectively arranged on the same side of the corresponding pump covers, and the first liquid inlet, the first liquid outlet, the second liquid inlet and the second liquid outlet are in communication with the pipe;
when the volume of the first cavity is reduced and the volume of the second cavity is enlarged, the first liquid outlet and the second liquid inlet are in communication with the pipe, and the first liquid inlet and the second liquid outlet are closed; when the volume of the first cavity is enlarged and the volume of the second cavity is reduced, the first liquid inlet and the second liquid outlet are in communication with the pipe, and the first liquid outlet and the second liquid inlet are closed.

16. The diaphragm pump according to claim 15, **characterized in that** the diaphragm pump further comprises:
a first liquid inlet check valve to control opening and closing of the first liquid inlet;
a first liquid outlet check valve to control opening and closing of the first liquid outlet;
a second liquid inlet check valve to control opening and closing of the second liquid inlet; and
a second liquid outlet check valve to control opening and closing of the second liquid outlet;
when the volume of the first cavity is reduced and the volume of the second cavity is enlarged, the first liquid outlet check valve and the second liquid inlet check valve are opened, and the first liquid inlet check valve and the second liquid outlet check valve are closed, so that the first liquid outlet and the second liquid inlet are in communication with the pipe, and the first liquid inlet and the second liquid outlet are closed;
when the volume of the first cavity is enlarged and the volume of the second cavity is reduced, the first liquid inlet check valve and the second liquid outlet check valve are opened, and the first liquid outlet check valve and the second liquid inlet check valve are closed, so that the first liquid inlet and the second liquid outlet are in communication with the pipe, and the first liquid outlet and the second liquid inlet are closed.

17. An agricultural plant protection machine, comprising a frame, a liquid storage tank to store a pesticide, a pipe connected with the liquid storage tank, and a spray assembly, **characterized in that** the agricultural plant protection machine further comprises a diaphragm pump connected between the liquid storage tank and the spray assembly via the pipe, the diaphragm pump includes:
a pump body including a containing cavity;
a pump cover on the pump body;
a diaphragm arranged in the containing cavity, the diaphragm being coupled with the pump cover, so that the diaphragm and the pump cover surround to form a cavity; and
a driving mechanism in the containing cavity, the driving mechanism including a push rod, a coil assembly and an elastic reset member, the push rod being connected to the diaphragm, and connected to the elastic reset member;
when the coil assembly is powered on and powered off alternately, the push rod makes a reciprocating linear motion to drive the diaphragm to reciprocate relative to the pump cover so as to reduce or enlarge the cavity;
wherein, when the coil assembly is powered on, the push rod moves along a forward direction under a magnetic attraction force from the coil assembly; when the coil assembly is powered off, the push rod moves along a backward direction under an elastic force from the elastic reset member, and the forward direction and the backward direction are two opposite directions.

18. The agricultural plant protection machine according to claim 17, **characterized in that** the push rod includes a rod body to connect the diaphragm and a protrusion on a side wall of the rod body, the protrusion and the coil assembly are spaced apart;
when the coil assembly is powered on, the protrusion moves along the forward direction under the magnetic attraction force of the coil assembly to drive the rod body to move along the forward direction.

19. The agricultural plant protection machine according to claim 18, **characterized in that** the protrusion is directly opposite to the coil assembly.

20. The agricultural plant protection machine according to claim 18 or 19, **characterized in that** the protrusion is a ring-shape structure, and the coil assembly is sleeved over and fixed to the rod body.

21. The agricultural plant protection machine according to claim 18, **characterized in that** the elastic reset member is sleeved over the rod body, an end of the elastic reset member is connected to the protrusion, and another end of the elastic reset member thereof is connected to the coil assembly.

22. The agricultural plant protection machine according to claim 21, **characterized in that** a first containing part is arranged between the protrusion and the rod body, a second containing part is arranged between the coil assembly and the rod body;
an end of the elastic reset member is contained in the first containing part, and another end of the elastic reset member is contained in the second containing part.

23. The agricultural plant protection machine according to claim 17, **characterized in that** the diaphragm pump further comprises a quick release member, and the coil assembly is fixed to the pump body via the quick release member.

24. The agricultural plant protection machine according to claim 17, **characterized in that** the diaphragm pump further comprises a diaphragm support, an end of the diaphragm support abuts against a side of the diaphragm far away from the pump cover, and another end of the diaphragm support is connected to the push rod;
wherein a contact area between the diaphragm support and the side of the diaphragm far away from the pump cover is greater than a preset area threshold.

25. The agricultural plant protection machine according to claim 24, **characterized in that** the diaphragm support abuts against the side of the diaphragm far away from the pump cover through a cambered surface.

26. The agricultural plant protection machine according to claim 25, **characterized in that** a rigidity of the diaphragm support is greater than a preset rigidity threshold.

27. The agricultural plant protection machine according to claim 24, **characterized in that** the diaphragm support covers the side of the diaphragm far away from the pump cover.

28. The agricultural plant protection machine according to claim 24, **characterized in that** the diaphragm support is sleeved over and fixed to an end of the push rod.

29. The agricultural plant protection machine according to claim 17, **characterized in that** the diaphragm pump further comprises a connecting part, an end of the connecting part is connected to an end of the push rod, and another end of the connecting part is connected to the diaphragm.

30. The agricultural plant protection machine according to claim 17, 18 or 24, **characterized in that** the pump cover includes two pump covers, the diaphragm includes two diaphragms, the two pump covers correspond to and cooperate with the two diaphragms;
wherein the two pump covers are respectively arranged on two sides of the pump body, the two diaphragms are respectively installed on the corresponding pump covers, the cavity includes a first cavity and a second cavity, which are respectively surrounded by the two diaphragms and the corresponding two pump covers;
an end of the push rod is connected to one of the two diaphragms, and another end of the push rod is connected to the other of the two diaphragms;
the push rod drives the two diaphragms to move toward or away from the corresponding pump covers, so that a volume change of the first cavity is opposite of a volume change of the second cavity.

31. The agricultural plant protection machine according to claim 30, **characterized in that** the diaphragm pump further includes a first liquid inlet and a first liquid outlet respectively connected to the first cavity, and a second liquid inlet and a second liquid outlet respectively connected to the second cavity, the first liquid inlet and the first liquid outlet, the second liquid inlet and the second liquid outlet are respectively arranged on the same side of the corresponding pump covers, and the first liquid inlet, the first liquid outlet, the second liquid inlet and the second liquid outlet are in communication with a pipe;
when the volume of the first cavity is reduced and the volume of the second cavity is enlarged, the first liquid outlet and the second liquid inlet are in communication with the pipe, and the first liquid inlet and the second liquid outlet are closed; when the volume of the first cavity is enlarged and the volume of the second cavity is reduced, the first liquid inlet and the second liquid outlet are in communication with the pipe, and the first liquid outlet and the second liquid inlet are closed.

32. The agricultural plant protection machine according to claim 31, **characterized in that** the diaphragm pump further includes:
a first liquid inlet check valve to control opening and closing of the first liquid inlet;
a first liquid outlet check valve to control opening and closing of the first liquid outlet;
a second liquid inlet check valve to control opening and closing of the second liquid inlet; and
a second liquid outlet check valve to control opening and closing of the second liquid outlet;
when the volume of the first cavity is reduced and the volume of the second cavity is enlarged, the first liquid outlet check valve and the second liquid inlet check valve are opened, and the first liquid inlet check valve and the second liquid outlet check valve are closed, so that the first liquid outlet and the second liquid inlet are in communication with the pipe, and the first liquid inlet and the second liquid outlet are closed;
when the volume of the first cavity is enlarged and the volume of the second cavity is reduced, the first liquid inlet check valve and the second liquid outlet check valve are opened, and the first liquid outlet check valve and the second liquid inlet check valve are closed, so that the first liquid inlet and the second liquid outlet are in communication with the pipe, and the first liquid outlet and the second liquid inlet are closed.
